# EUROPÄISCHE PATENTSCHRIFT

(11) **EP 3 519 244 B1**
(45) Veröffentlichungstag und Bekanntmachung des Hinweises auf die Patenterteilung: **26.08.2020**
(21) Anmeldenummer: 17772708.8
(22) Anmeldetag: 27.09.2017
(51) Int. Cl.: B60N 2/14, B60N 2/42, B60R 22/00

(54) **SITZANLAGE FÜR EINEN KRAFTWAGEN**
SEAT SYSTEM FOR A MOTOR VEHICLE
ENSEMBLE SIÈGE(S) POUR VÉHICULE À MOTEUR

(30) Priorität: 29.09.2016 DE 102016218795
(43) Veröffentlichungstag der Anmeldung: 07.08.2019
(73) Patentinhaber: Bayerische Motoren Werke Aktiengesellschaft, 80809 München (DE)
(72) Erfinder: LATHWESEN, Harald, 85419 Mauern (DE); BOESE, Andreas, 82166 Gräfelfing (DE); FRANZ, Matthias, 83098 Brannenburg (DE)
(86) Internationale Anmeldenummer: PCT/EP2017/074428
(87) Internationale Veröffentlichungsnummer: WO 2018/060214

(56) Entgegenhaltungen:
- DE-A1- 3 816 834
- DE-A1-102014 214 364
- FR-A1- 2 993 214

## Beschreibung

Die Erfindung betrifft eine Sitzanlage für einen Kraftwagen gemäß dem Oberbegriff des Patentanspruchs 1.

Aus der FR 2 993 214 A1 ist bereits eine Sitzanlage für einen Kraftwagen bekannt, die wenigstens einen Fahrzeugsitz umfasst, welcher zwischen einer ersten Stellung in Vorwärtsrichtung des Kraftwagens und einer zweiten Stellung entgegen der Vorwärtsrichtung verstellbar ist, und mit einer Sicherheitsgurteinrichtung versehen ist.

Aus dem Kraftwagenbau ist bereits eine Vielzahl von Sitzanlagen mit jeweiligen einzelnen Fahrzeugsitzen bekannt, welche sowohl in als auch entgegen der Vorwärtsfahrtrichtung des Kraftwagens in einer ersten beziehungsweise zweiten Stellung positioniert werden können. Eine Verlagerung zwischen den beiden Stellungen erfolgt üblicher Weise durch eine Drehung des Fahrzeugsitzes um dessen Hochachse. Hierzu ist ein entsprechender Mechanismus im Bereich des Sitzuntergestells vorgesehen.

Waren derartige Sitzanlagen bislang zumeist aus Transportern, Wohnmobilen oder Vans bekannt, eröffnet das zunehmende autonome Fahren von Kraftwagen gerade auch bei anderen Fahrzeugbauweisen, insbesondere Personenkraftwagen, die Möglichkeit, derartige Sitzanlagen einzusetzen. Allerdings ist hierbei zu berücksichtigen, dass im Fahrbetrieb in der Stellung entgegen der Vorwärtsfahrtrichtung des Kraftwagens bei einer unfallbedingten Kraftbeaufschlagung, insbesondere infolge einer Frontalkollision des Fahrzeugs, hohe Kraftimpulse auf den Sitzinsassen und den Fahrzeugsitz wirken, welche es abzufangen gilt. Dies betrifft unter anderem in hohem Maß die Sicherheitsgurteinrichtung zum Rückhalten beziehungsweise Sichern des Sitzinsassen. Aus diesem Grund müssen Sicherheitsgurteinrichtung, welche entgegen der Vorwärtsfahrtrichtung des Kraftwagens eingesetzt werden können, erhebliche Kräfte aufnehmen können.

Werden dabei sogenannte Integralsitze eingesetzt, bei denen die Sicherheitsgurteinrichtung ausschließlich am Fahrzeugsitz befestigt ist, ist zwar eine sehr einfache Verlagerung des Fahrzeugsitzes zwischen den beiden Stellungen gegeben. Allerdings muss der Fahrzeugsitz in diesem Fall sehr steif und demzufolge massiv ausgebildet sein, um zusätzlich auch die über die Sicherheitsgurteinrichtung bei einer unfallbedingten Kraftbeaufschlagung eingeleiteten Kräfte aufnehmen zu können. Dies hat hinsichtlich des Gewichts, der Komplexität, und der Herstellungskosten des jeweiligen Fahrzeugsitzes der Sitzanlage erhebliche Nachteile.

Es ist daher Aufgabe der vorliegenden Erfindung, eine Sitzanlage zu schaffen, welche hinsichtlich des Gewichts, der Komplexität und der Herstellungskosten optimiert ist.

Diese Aufgabe wird erfindungsgemäß durch eine Sitzanlage mit den Merkmalen des Patentanspruchs 1 gelöst. Vorteilhafte Ausführungen der Erfindung sind Gegenstand der abhängigen Patentansprüche und der Beschreibung.

Eine erfindungsgemäße Sitzanlage umfasst wenigstens einen, zwischen einer ersten Stellung in Vorwärtsfahrtrichtung des Kraftwagens und einer zweiten Stellung entgegen der Vorwärtsfahrtrichtung des Kraftwagens verstellbaren Fahrzeugsitz. Hierdurch kann die Sitzanlage beispielsweise bei autonom fahrbaren Fahrzeugen zu Einsatz kommen, bei denen der Fahrzeugsitz auch im Fahrbetrieb entgegen der Vorwärtsfahrtrichtung des Kraftwagens positioniert sein kann. Um bei einer derartigen Fahrt entgegen der Vorwärtsfahrtrichtung des Kraftwagens einen entsprechenden Unfallschutz bereitstellen zu können, umfasst die Sicherheitsgurteinrichtung neben einem Gurtsystem, mittels welchem der zugehörige Sitzinsasse in der ersten Stellung in Vorwärtsfahrtrichtung des Fahrzeugsitzes gesichert ist, auch ein Gurtsystem, mittels dem der Sitzinsasse in der zweiten Stellung entgegen der Vorwärtsfahrtrichtung des Fahrzeugsitzes gesichert ist. Hierbei ist das jeweilige Gurtsystem für die erste und die zweite Stellung des Fahrzeugsitzes jeweils an korrespondierenden kraftwagenrohbauseitigen Haltestellen gehalten.

Dies bedeutet, dass für jede der beiden Stellungen des Fahrzeugsitzes ein jeweiliges, am Kraftwagenrohbau gehaltenes Gurtsystem vorgesehen ist, mittels welchem ein Sitzinsasse in Vorwärtsfahrtrichtung beziehungsweise entgegen der Vorwärtsfahrtrichtung gesichert und rückgehalten werden kann. Durch die Halterung an entsprechenden Haltestellen am Kraftwagenrohbau ist es somit gegenüber einer Halterung am Kraftwagensitz möglich, den Fahrzeugsitz relativ filigran, gewichtsgünstig und wenig komplex zu gestalten, was mit einer entsprechenden Kosteneinsparung einhergeht. Durch das Vorsehen jeweiliger Gurtsysteme für die erste Stellung und die zweite Stellung des Fahrzeugsitzes in Vorwärtsfahrtrichtung beziehungsweise entgegen der Vorwärtsfahrtrichtung ist gleichwohl eine Sicherung des Sitzinsassen in beiden Stellungen beziehungsweise Orientierungen gegeben.

Dabei gilt es im Rahmen der Erfindung als mitumfasst, dass die beiden Gurtsysteme zwar insbesondere, jedoch nicht zwingendermaßen verschieden sein müssen. Unter Umständen wäre es sogar denkbar, lediglich ein Gurtsystem zu verwenden, welchen entsprechend der jeweiligen Stellung des Fahrzeugsitzes umgesteckt beziehungsweise umgebaut wird. Bevorzugter Weise werden jedoch zwei getrennte Gurtsysteme eingesetzt.

In einer vorteilhaften Ausgestaltung der Erfindung ist das Gurtsystem für die zweite Stellung des Fahrzeugsitzes an wenigstens einer kraftwagenrohbauseitigen Haltestelle lösbar gehalten. Hierdurch ist es möglich, das Gurtsystem bei Nichtgebrauch von den entsprechenden Haltestellen abzunehmen. Insbesondere kommt eine derartige Lösung bei einem im Bereich einer A-Säule gehaltenen Gurtsystem in Betracht, welches bei Positionierung des Fahrzeugsitzes in der zweiten Stellung, bei der der Fahrzeugsitz entgegen der Vorwärtsfahrtrichtung angeordnet ist, zum Einsatz kommt und bei Positionierung in der ersten Stellung, bei der der Fahrzeugsitz in Vorwärtsfahrtrichtung angeordnet ist, abgenommen werden kann, um somit eine störende Anordnung des Gurtsystems zu vermeiden.

In diesem Zusammenhang hat es sich als weiter günstig gezeigt, wenn ein Gurtumlenker des Gurtsystems für die zweite Stellung des Fahrzeugsitzes lösbar an der zugehörigen kraftwagenrohbauseitigen Haltestelle gehalten ist. Ein solcher Gurtumlenker befindet sich beispielsweise an der A-Säule im Bereich des Blickfeldes des jeweiligen Sitzinsassen und würde von diesem als störend empfunden, wenn dieser in dem in Vorwärtsfahrtrichtung ausgerichteten Fahrzeugsitz sitzt.

Dieser Gurtumlenker sowie ein Gurtendbeschlag des Gurtsystems für die zweite Stellung des Fahrzeugsitzes sind in weiterer Ausgestaltung der Erfindung im Bereich einer A-Säule an jeweils zugehörigen kraftwagenrohbauseitigen Haltestellen gehalten. Auf diese Weise kann eine vordere Fahrzeugsitzreihe auf besonders günstige Weise mit einem Gurtsystem ausgestattet werden, welches zur Rückhaltung des Sitzinsassen bei entgegen der Vorwärtsfahrtrichtung angeordnetem Fahrzeugsitz dient.

Schließlich ist in einer weiteren Ausführungsform der Erfindung vorgesehen, dass das Gurtsystem für die zweite Stellung des Fahrzeugsitzes bei Nichtgebrauch zumindest im Wesentlichen im Bereich einer Instrumententafel verborgen anzuordnen ist. Hierdurch ist eine nicht-störende Unterbringung des Gurtsystems bei Nichtgebrauch, nämlich bei in Vorwärtsfahrtrichtung angeordnetem Fahrzeugsitz, möglich.

Weitere Einzelheiten der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert.

Dabei zeigen:

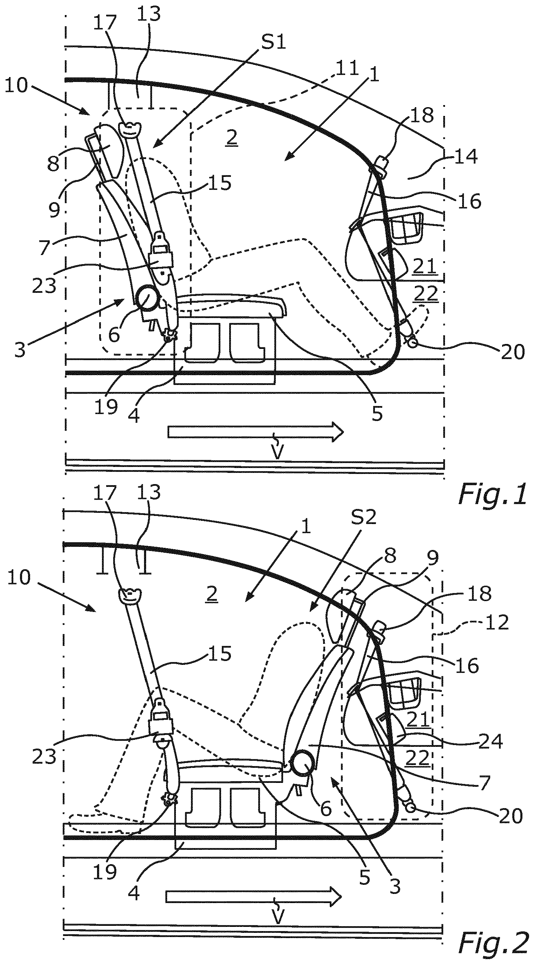

- Fig. 1: eine schematische Seitenansicht auf eine Sitzanlage für einen Personenkraftwagen, mit einem Fahrzeugsitz einer vorderen Fahrzeugsitzreihe, welcher in einer ersten Stellung in Vorwärtsfahrtrichtung des Kraftwagens angeordnet ist, und mit einem Sicherheitsgurteinrichtung, welche für die erste Stellung des Fahrzeugsitzes ein an korrespondierenden kraftwagenrohbauseitigen Haltestellen gehaltenes Gurtsystem umfasst, mittels welchem ein Sitzinsassen in der ersten des Fahrzeugsitzes gesichert ist,
- Fig. 2: eine schematische Seitenansicht auf die Sitzanlage gemäß Fig.1, bei der der Fahrzeugsitz in einer zweiten Stellung entgegen der Vorwärtsfahrtrichtung des Kraftwagens angeordnet ist, und bei der für die zweit Stellung des Fahrzeugsitzes ein an korrespondierenden kraftwagenrohbauseitigen Haltestellen gehaltenes weiteres Gurtsystem der Sicherheitsgurteinrichtung vorgesehen ist, mittels welchem ein Sitzinsasse in der zweiten Stellung des Fahrzeugsitzes gesichert werden kann.

In den Fig. 1 und 2 ist jeweils in einer schematischen Seitenansicht eine Sitzanlage 1 in einem Innenraum 2 eines Personenkraftwagens dargestellt. Die Sitzanlage 1 umfasst dabei jeweilige Fahrzeugsitze 3 einer vorderen Fahrzeugsitzreihe, von welchen im vorliegenden Fall der- bezogen auf eine mit einem Pfeil V angedeutete Vorwärtsfahrtrichtung - linke Sitz dargestellt ist. Prinzipiell ist die vorliegende Erfindung jedoch auch auf den rechten Sitz anwendbar, ebenso wie für Fahrzeugsitze einer hinteren Sitzreihe. Der Fahrzeugsitz 3 umfasst vorliegend ein auf einem Sitzuntergestell 4 ruhendes Sitzkissenteil 5, ein über jeweilige Beschläge 6 am Sitzuntergestell 4 und/oder am Sitzkissenteil 5 gelagerten Rückenlehnenteil 7 sowie eine Kopfstütze 8, welche über jeweilige Führungsstangen 9 höhenverschiebbar am Rückenlehnenteil 7 gehalten ist.

Eine Zusammenschau der Fig. 1 und 2 lässt erkennen, dass der Fahrzeugsitz 3 zwischen einer in Fig. 1 dargestellten ersten Stellung S1 in Vorwärtsfahrtrichtung V des Kraftwagens und einer in Fig. 2 dargestellten zweiten Stellung S2 entgegen der Vorwärtsfahrtrichtung V des Kraftwagens verstellbar ist. Dies erfolgt beispielsweise durch Drehen des Fahrzeugsitzes 3 um eine in Fahrzeughochrichtung verlaufende Drehachse im Bereich des Sitzuntergestells 4 um 180°. In der ersten Stellung S1 in Vorwärtsfahrtrichtung V des Kraftwagens befindet sich der Fahrzeugsitz 3 beispielsweise im normalen Fahrbetrieb. In der zweiten Stellung S2 entgegen der Vorwärtsfahrtrichtung V des Kraftwagens befindet sich der Fahrzeugsitz 3 beispielsweise im autonomen Fahrbetrieb des Kraftwagens, so dass der Fahrer oder Beifahrer entgegen der Vorwärtsfahrtrichtung V sitzen können, um beispielsweise mit Fahrzeuginsassen einer hinteren Fahrzeugsitzreihe besser kommunizieren zu können.

Überdies umfasst die Sitzanlage 1 eine Sicherheitsgurteinrichtung 10, welche zur Sicherung eines schematisch angedeuteten Sitzinsassen des Fahrzeugsitzes 3 in der ersten Stellung S1 und zweiten Stellung S2 vorgesehen ist. Hierzu umfasst die Sicherheitsgurteinrichtung 10 für die erste Stellung S1 und die zweite Stellung S2 des Fahrzeugsitzes 4 ein jeweiliges Gurtsystem 11, 12, welches durch eine jeweilige gestrichelte Linie hervorgehoben ist. Das Gurtsystem 11 dient dabei zur Sicherung des Sitzinsassen in der ersten Stellung S1 des Fahrzeugsitzes 3 in Vorwärtsfahrtrichtung V und ist im Wesentlichen im Bereich einer B-Säule 13 angeordnet. Das andere Gurtsystem 12 dient zur Sicherung des Sitzinsassen in der zweiten Stellung S2 des Fahrzeugsitzes 3 entgegen der Vorwärtsfahrtrichtung V und ist im Wesentlichen im Bereich einer A-Säule 14 angeordnet. Je nach Stellung S1 oder S2 des Fahrzeugsitzes 3 kommt somit entweder das eine Gurtsystem 11 oder das andere Gurtsystem 12 zum Einsatz.

Jedes dieser Gurtsysteme 11, 12 umfasst ein Gurtband 15, 16, welches in einem Gurtautomaten 23, 24 auf- beziehungsweise abwickelbar ist. Oberseitig ist das Gurtband 15, 16 an einem zugehörigen Gurtumlenker 17, 18 umgelenkt und unterseitig an einem Gurtendbeschlag 19, 20 fixiert. Dies bedeutet insbesondere, dass das jeweilige Gurtband 15, 16 - mit dem zugehörigen Gurtumlenker 17, 18 und dem entsprechenden Gurtendbeschlag 19, 20 - als entsprechenden Haltestellen - kraftwagenrohbauseitig gehalten ist. Durch diese zumindest im Wesentlichen vorgesehene Festlegung des jeweiligen Gurtsystems 11, 12 am Kraftwagenrohbau, beispielsweise der seitlich zugeordneten A- oder B - Säule 14, 13, müssen Kräfte, welche beispielsweise infolge einer unfallbedingten Kraftbeaufschlagung des Kraftwagens auf den Sitzinsassen und somit das jeweilige Gurtsystem 11, 12 wirken, zumindest zu großen Teilen nicht vom Fahrzeugsitz 3 selbst abgefangen werden, sondern können vielmehr in den Kraftwagenrohbau eingeleitet werden. Im Unterschied zu einem Integralsitz mit in den Fahrzeugsitz integrierter Sicherheitsgurteinrichtung 10 können somit beim vorliegenden Fahrzeugsitz 3 relativ filigrane und leichte Teile zum Einsatz kommen, beispielsweise im Bereich des Sitzkissen - und Lehnenrahmens oder im Bereich der Sitzbeschläge.

Das Gurtsystem 12 für die zweite Stellung S2 des Fahrzeugsitzes 3 gemäß Fig. 2 ist im Bereich seiner einen kraftwagenrohbauseitigen Haltestelle, welche durch den Gurtumlenker 18 gebildet ist, mittels eines Steckschlosses in der A-Säule 14 lösbar gehalten. Wird beispielsweise der Fahrzeugsitz 3 in der ersten Stellung gemäß Fig. 1 eingestellt beziehungsweise sitzt demzufolge in Vorwärtsfahrtrichtung V noch vorne blickend, so kann der sich dann nicht im Einsatz befindende Gurtumlenker 18 entsprechend abgenommen und an anderer Stelle, beispielsweise im Bereich einer angedeuteten Instrumententafel 21 oder unterhalb von dieser in einem Fußraum 22 - an einem weiteren Steckschloss fixiert werden. Hierdurch ergibt sich für den nach vorne blickenden Sitzinsassen eine freie Sicht ohne störendes Gurtband 16 und störenden Gurtumlenker 18. Natürlich könnten gegebenenfalls auch die anderen kraftwagenrohbauseitigen Haltestellen des Gurtsystems 12 abnehmbar gestaltet sein, um dieses bei Nichtgebrauch möglichst verborgen anzuordnen. Theoretisch wäre es auch denkbar, lediglich ein Gurtsystem 11 beziehungsweise 12 einzusetzen und dieses -je nach Stellung S1 oder S2 des Fahrzeugsitzes 3 - entweder an den jeweiligen Haltestellen im Bereich der B-Säule 13 oder der A-Säule 14 zu fixieren, um den Sitzinsassen in der gewählten Stellung S1 oder S2 des Fahrzeugsitzes 3 zu sichern.

### Bezugszeichenliste

- 1: Sitzanilage
- 2: Innenraum
- 3: Fahrzeugsitze
- 4: Sitzuntergestell
- 5: Sitzkissenteil
- 6: Beschläge
- 7: Rückenlehnenteil
- 8: Kopfstütze
- 9: Führungsstangen
- 10: Sicherheitsgurteinrichtung
- 11: Gurtsystem
- 12: Gurtsystem
- 13: B-Säule
- 14: A-Säule
- 15: Gurtband
- 16: Gurtband
- 17: Gurtumlenker
- 18: Gurtumlenker
- 19: Gurtendbeschlag
- 20: Gurtendbeschlag
- 21: Instrumententafel
- 22: Fußraum
- 23: Gurtautomat
- 24: Gurtautomat

- V: Vorwärtsfahrtrichtung
- S1: erste Stellung des Fahrzeugsitzes
- S2: zweite Stellung des Fahrzeugsitzes

## Patentansprüche

1. Sitzanlage (1) für einen Kraftwagen, mit wenigstens einem Fahrzeugsitz (3), welcher zwischen einer ersten Stellung (S1) in Vorwärtsfahrtrichtung (V) des Kraftwagens und einer zweiten Stellung (S2) entgegen der Vorwärtsfahrtrichtung (V) des Kraftwagens verstellbar ist, und mit einem Sicherheitsgurteinrichtung (10), welche zur Sicherung eines Sitzinsassen des Fahrzeugsitzes (3) in der ersten und zweiten Stellung (S1, S2) vorgesehen ist,
**dadurch gekennzeichnet, dass**
die Sicherheitsgurteinrichtung (10) für die erste und die zweite Stellung (S1, S2) des Fahrzeugsitzes (3) ein jeweiliges, an korrespondierenden kraftwagenrohbauseitigen Haltestellen (17, 18; 19, 20) gehaltenes Gurtsystem (11, 12) umfasst.

2. Sitzanlage (1) nach Anspruch 1,
**dadurch gekennzeichnet, dass**
das Gurtsystem (12) für die zweite Stellung (S2) des Fahrzeugsitzes (3) an wenigstens einer kraftwagenrohbauseitigen Haltestelle (18) lösbar gehalten ist.

3. Sitzanlage (1) nach Anspruch 2,
**dadurch gekennzeichnet, dass**
ein Gurtumlenker (18) des Gurtsystems (12) für die zweite Stellung (S2) des Fahrzeugsitzes (3) lösbar am Kraftwagenrohbau gehalten ist.

4. Sitzanlage (1) nach Anspruch 2 oder 3,
**dadurch gekennzeichnet, dass**
der Gurtumlenker (18) sowie ein Gurtendbeschlag (20) des Gurtsystems (12) für die zweite Stellung (S2) des Fahrzeugsitzes (3) im Bereich einer A-Säule (14) am Kraftwagenrohbau gehalten ist.

5. Sitzanlage (1) nach einem der Ansprüche 2 bis 4,
**dadurch gekennzeichnet, dass**
das Gurtsystem (12) für die zweite Stellung (S2) des Fahrzeugsitzes (3) bei Nichtgebrauch zumindest im Wesentlichen im Bereich einer Instrumententafel (21) verborgen anzuordnen ist.

## Claims

1. Seat system (1) for a motor vehicle, comprising at least one vehicle seat (3) which can be adjusted between a first position (S1) in the forward direction of travel (V) of the motor vehicle and a second position (S2) counter to the forward direction of travel (V) of the motor vehicle, and comprising a safety belt device (10) which is provided for securing an occupant seated in the vehicle seat (3) in the first and the second position (S1, S2),
**characterized in that**
the safety belt device (10) for the first and the second position (S1, S2) of the vehicle seat (3) comprises a respective belt system (11, 12) which is held at corresponding holding points (17, 18; 19, 20) on the motor vehicle bodyshell.

2. Seat system (1) according to Claim 1,
**characterized in that**
the belt system (12) for the second position (S2) of the vehicle seat (3) is detachably held at at least one holding point (18) on the motor vehicle bodyshell.

3. Seat system (1) according to Claim 2,
**characterized in that**
a belt deflector (18) of the belt system (12) for the second position (S2) of the vehicle seat (3) is detachably held on the motor vehicle bodyshell.

4. Seat system (1) according to Claim 2 or 3,
**characterized in that**
the belt deflector (18) and also a belt end fitting (20) of the belt system (12) for the second position (S2) of the vehicle seat (3) are held on the motor vehicle bodyshell in the region of an A-pillar (14).

5. Seat system (1) according to one of Claims 2 to 4,
**characterized in that**
the belt system (12) for the second position (S2) of the vehicle seat (3) is to be arranged in a concealed manner at least substantially in the region of an instrument panel (21) when not in use.

## Revendications

1. Installation de siège (1) pour un véhicule automobile, comprenant au moins un siège de véhicule (3) qui peut être déplacé entre une première position (S1) dans la direction de marche avant (V) du véhicule automobile et une deuxième position (S2) à l'encontre de la direction de marche avant (V) du véhicule automobile, et comprenant un dispositif de ceinture de sécurité (10) qui est prévu pour retenir un occupant du siège de véhicule (3) dans la première et la deuxième position (S1, S2),
**caractérisée en ce que**
le dispositif de ceinture de sécurité (10) pour la première et la deuxième position (S1, S2) du siège de véhicule (3) comprend un système de ceinture (11, 12) respectif retenu au niveau de points de fixation (17, 18 ; 19, 20) correspondants du côté de la carrosserie du véhicule automobile.

2. Installation de siège (1) selon la revendication 1,
**caractérisée en ce que**
le système de ceinture (12) pour la deuxième position (S2) du siège de véhicule (3) est retenu de manière amovible au niveau d'au moins un point de fixation (18) du côté de la carrosserie du véhicule automobile.

3. Installation de siège (1) selon la revendication 2,
**caractérisée en ce**
**qu'**un renvoi de ceinture (18) du système de ceinture (12) pour la deuxième position (S2) du siège de véhicule (3) est retenu de manière amovible au niveau de la carrosserie du véhicule automobile.

4. Installation de siège (1) selon la revendication 2 ou 3,
**caractérisée en ce que**
le renvoi de ceinture (18) ainsi qu'une ferrure de terminaison de ceinture (20) du système de ceinture (12) pour la deuxième position (S2) du siège de véhicule (3) sont retenus dans la région d'une colonne A (14) au niveau de la carrosserie du véhicule automobile.

5. Installation de siège (1) selon l'une quelconque des revendications 2 à 4,
**caractérisée en ce que**
le système de ceinture (12) pour la deuxième position (S2) du siège de véhicule (3), lorsqu'il n'est pas utilisé, doit être disposé de manière dissimulée au moins essentiellement dans la région d'un tableau de bord (21).
